# FASCICULE DE BREVET EUROPEEN

(11) **EP 3 035 411 B1**
(45) Date de publication et mention de la délivrance du brevet: **19.07.2017**
(21) Numéro de dépôt: 15199785.5
(22) Date de dépôt: 14.12.2015
(51) Int. Cl.: H01M 2/26, B23K 101/38, B22F 3/105, H01M 2/30, H01M 10/0525, B23K 26/342, B23K 26/144, B23K 26/00

(54) **PROCEDE DE CONNEXION DANS UN ACCUMULATEUR ET ACCUMULATEUR AINSI CONNECTE**
VERBINDUNGSVERFAHREN IN EINEM AKKUMULATOR, UND SO VERBUNDENER AKKUMULATOR
METHOD FOR CONNECTION IN AN ACCUMULATOR, AND ACCUMULATOR THUS CONNECTED

(30) Priorité: 15.12.2014 FR 1462406
(43) Date de publication de la demande: 22.06.2016
(73) Titulaire: Saft Groupe S.A., 93170 Bagnolet (FR)
(72) Inventeur: RIGOBERT, Gérard, 33370 FARGUES St HILAIRE (FR); POUGET, Thomas, 33370 POMPIGNAC (FR)
(74) Mandataire: Hirsch & Associés

(56) Documents cités:
- EP-A1- 1 076 371
- EP-A1- 1 102 337
- EP-A1- 2 093 820
- EP-A2- 1 596 449

## Description

L'invention a pour objet un procédé de fabrication d'un accumulateur. Plus précisément, la présente invention a trait à la fabrication d'une pièce de connexion électrique entre une borne de sortie de courant et les électrodes d'une même polarité d'un faisceau électrochimique dans un accumulateur.

Un générateur électrochimique ou accumulateur (ces deux termes étant équivalents, on utilisera le terme d'accumulateur dans la présente description) est un dispositif de production d'électricité dans lequel de l'énergie chimique est convertie en énergie électrique. Il comprend un faisceau électrochimique comportant une alternance d'électrodes positives et négatives encadrant un séparateur imprégné d'électrolyte. Chaque électrode est constituée d'un collecteur de courant sous la forme d'un feuillard métallique recouvert sur au moins l'une de ses faces par un composé électrochimiquement actif. Les électrodes, disposées dans un conteneur, sont connectées électriquement à des bornes de sortie de courant qui assurent une continuité électrique entre les électrodes et un consommateur électrique auquel l'accumulateur est associé. Les bornes positive et négative de sortie de courant peuvent être fixées soit sur des parois différentes du conteneur de l'accumulateur, soit sur une même paroi du conteneur.

Les accumulateurs de format cylindrique comportent généralement deux bornes de sortie de courant sur une même paroi. L'accumulateur comprend un conteneur présentant une paroi cylindrique obturée par un fond à une extrémité et ouverte à l'autre extrémité. Un couvercle est placé sur l'extrémité ouverte. Il supporte les bornes de sortie de courant. Une première borne de sortie de courant, par exemple la borne positive, est soudée sur le couvercle. Une seconde borne de sortie de courant, par exemple la borne négative, passe à travers le couvercle. Elle peut être fixée sur celui-ci par sertissage de matière de la borne. Un joint isole électriquement la borne de sortie de courant négative du couvercle. Le faisceau électrochimique, constitué par un enroulement d'électrodes positives, négatives et de séparateurs, est disposé autour d'un axe creux qui sert de cheminée de gaz. Les extrémités des collecteurs de courant des électrodes positives et négatives ne sont pas recouvertes de composés électrochimiquement actifs. Ces extrémités libres font saillie aux deux extrémités du faisceau électrochimique. L'extrémité libre des collecteurs de courant des électrodes positive fait saillie vers le bas du faisceau électrochimique. L'extrémité libre des collecteurs de courant des électrodes négatives fait saillie vers le haut du faisceau électrochimique. Les tranches des extrémités libres se juxtaposent pour former une surface essentiellement plane qui sert de lieu de connexion à une pièce de connexion. Une pièce de connexion plane raccorde l'électrode positive du faisceau à la paroi du fond du conteneur, les parois du conteneur étant électriquement conductrices avec le couvercle. Une pièce de connexion plane raccorde l'électrode négative du faisceau à la borne de sortie de courant négative.

Typiquement, le dispositif de raccordement électrique à la borne traversante du conteneur, c'est à dire la borne négative peut être assemblé de la façon suivante. Une pièce de connexion est soudée sur les extrémités des collecteurs des électrodes d'une même polarité, puis un élément supplémentaire est soudé à la pièce de connexion en l'une de ses extrémités et sur le pied de la borne traversante en l'autre de ses extrémités. Une telle connexion interne est notamment décrite dans les documents EP-A-1 102 337 ou EP-A-1 596 449.

Toutefois, pour des applications de puissance, il est nécessaire d'assurer le passage de courants forts à travers les connexions de l'accumulateur, par exemple des courants supérieurs à 100 A. Il devient alors nécessaire de réaliser les connexions avec des matériaux de bonne conductibilité tels que le cuivre ou l'aluminium. Typiquement, les feuillards des électrodes négatives sont en cuivre et les feuillards des électrodes positives sont en aluminium pour des raisons de compatibilité avec les matières actives, notamment pour les accumulateurs de type Lithium-ion. Ainsi, dans la technologie Lithium-ion, la borne positive reliée au conteneur est généralement en aluminium et la borne négative est généralement en cuivre. La pièce de connexion est aussi choisie en cuivre pour assurer la bonne conduction des courants forts et la compatibilité avec la borne négative en cuivre.

Toutefois, la pièce de connexion interne doit être soudée aux collecteurs des électrodes négatives en cuivre puis au pied de la borne traversante. Dans la technologie Lithium-ion, les soudures sont typiquement réalisées au laser. Or, la soudure laser n'est pas efficace sur du cuivre car le faisceau laser est naturellement réfléchi par le cuivre. Pour pallier ce phénomène, il est connu d'utiliser une plaque de nickel ou d'acier inoxydable que l'on interpose entre la pièce de connexion en cuivre et le faisceau laser afin de « tromper » le laser et transmettre l'énergie thermique du laser vers le cuivre à souder. La soudure de la pièce de connexion interne nécessite donc trois pièces : la pièce de connexion elle-même, une plaque de soudure en nickel à placer sur la portion à souder aux collecteurs et une plaque de soudure en nickel à placer sur la portion à souder au pied de la borne traversante.

Il est également connu, notamment du document EP-A-1 596 449, d'utiliser une connexion interne en cuivre nickelé. Le revêtement nickel, de quelques microns, est appliqué pour prévenir toute oxydation de la pièce en cuivre et n'est pas assez épais pour capter l'énergie du laser lors d'une soudure. Des pièces additionnelles de soudure en nickel doivent toujours être utilisées avec une connexion en cuivre nickelé.

La gestion simultanée de ces trois pièces complexifie le procédé de fabrication de l'accumulateur et représente un coût. De plus, ces plaques de nickel, de 0,5 mm d'épaisseur environ, restent ensuite dans l'accumulateur bien qu'elles ne servent qu'à la soudure de la pièce de connexion interne.

De ce fait, il est nécessaire de réduire le nombre de pièces nécessaires à la fabrication des accumulateurs, de manière à d'une part réduire les coûts de fabrication et d'autre part de manière à alléger les accumulateurs, et ce, tout en conservant une faible résistance pour permettre le passage de courants forts.

Il est par ailleurs connu, notamment du document EP-A1-2 093 820, de réaliser la connexion interne en cuivre nickelé avec des portions colaminées cuivre/nickel pour faciliter la soudure de la connexion interne sur un faisceau électrochimique.

Toutefois, le fait de souder la connexion interne sur le faisceau électrochimique peut provoquer des brûlures des séparateurs pouvant entrainant des défauts dans l'accumulateur. De plus, la soudure entre la connexion interne et le faisceau électrochimique ne permet pas d'obtenir des performances satisfaisantes en termes de passage de courant et de tenue mécanique. Enfin, un matériau colaminé cuivre/nickel a un coût important.

A cet effet, l'invention propose de construire directement sur la surface définie par les extrémités des collecteurs des électrodes, la pièce de connexion interne.

Plus particulièrement, l'invention concerne un procédé de connexion d'électrodes de même polarité d'un accumulateur à une borne de sortie de courant, ledit accumulateur comportant deux bornes de sortie de courant, un conteneur renfermant un faisceau électrochimique comprenant une alternance d'électrodes positives et négatives, les extrémités des collecteurs de courant des électrodes positives et négatives définissant respectivement une première et seconde surface, ledit procédé étant caractérisé en ce qu'il comprend une étape de fabrication additive d'une connexion interne reliant électriquement la première et/ou la seconde surface à la borne de sortie de courant correspondante, l'étape de fabrication additive étant réalisée au moyen d'une technique choisie dans la liste constituée par la fusion sélective par laser, le frittage sélectif par laser, le dépôt à fil tendu et l'invention concerne un accumulateur comportant deux bornes de sortie de courant, un faisceau électrochimique comprenant une alternance d'électrodes positives et négatives, les extrémités des collecteurs de courant des électrodes positives définissant une première surface et les extrémités des collecteurs de courant des électrodes négatives définissant une seconde surface, caractérisé en ce que les électrodes de même polarité sont connectées à la borne de sortie de courant correspondante selon un procédé conforme à l'une quelconque des revendications 1 à 12.

Des caractéristiques optionnelles de l'invention, complémentaires ou de substitution, sont énoncées ci-après

L'étape de fabrication additive est réalisée au moyen d'une technique choisie dans la liste constituée par la fusion sélective par laser, le frittage sélectif par laser, le dépôt à fil tendu.

Le procédé de connexion peut comprendre une étape dans laquelle un élément conducteur est interposé entre la pièce de connexion interne et la borne de sortie de courant.

Le procédé de connexion peut comprendre une étape de fabrication additive de l'élément conducteur de sorte que l'élément conducteur et la pièce de connexion interne forment une seule et même pièce.

L'étape de fabrication additive peut être réalisée par fusion sélective par laser, selon laquelle une poudre est injectée conjointement au faisceau laser afin de projeter le métal en fusion sur la première ou seconde surface.

L'étape de fabrication additive peut être réalisée par frittage sélectif par laser, selon laquelle des couches de poudre métallique sont successivement balayées par un faisceau laser, l'empilage des couches de poudres fusionnées conduisant à la réalisation de la pièce de connexion interne.

L'étape de fabrication additive peut être réalisée par dépôt à fil tendu, selon laquelle un fil est déployé conjointement au faisceau laser de manière à projeter du métal en fusion sur la première ou seconde surface.

La pièce de connexion interne peut être réalisée sur la première surface définie par l'extrémité des collecteurs de courant des électrodes positives, la pièce de connexion interne comprenant un matériau à base d'aluminium.

L'élément conducteur peut être mis électriquement en contact avec le fond du conteneur, ledit fond étant électriquement en contact avec la paroi du conteneur, elle-même en contact avec un couvercle obturant ledit conteneur, ledit couvercle étant électriquement en contact avec la borne de sortie de courant positive.

La pièce de connexion interne peut être réalisée sur la surface définie par l'extrémité des collecteurs des électrodes négatives, la pièce de connexion interne comprenant un matériau choisi dans le groupe constitué par le cuivre et ses alliages, le nickel et ses alliages, les aciers alliés au nickel et les aciers inoxydables.

L'élément conducteur peut être mis électriquement en contact avec la borne de sortie de courant négative, et préférentiellement soudé à celle-ci.

La pièce de connexion interne peut avoir une épaisseur comprise entre 0,4 et 1,2 mm.

D'autres caractéristiques et avantages de l'invention apparaîtront à la lecture de la description qui suit, donnée à titre d'exemple et en référence aux figures.
- La figure 1 représente une vue en coupe longitudinale d'un accumulateur cylindrique étanche connecté selon l'invention;
- La figure 2 représente une vue d'une pièce de connexion interne construite selon l'invention à l'une des extrémités d'un faisceau électrochimique selon une certaine configuration;
- La figure 3 représente une vue détaillée d'une pièce de connexion interne construite selon l'invention dans une autre configuration.

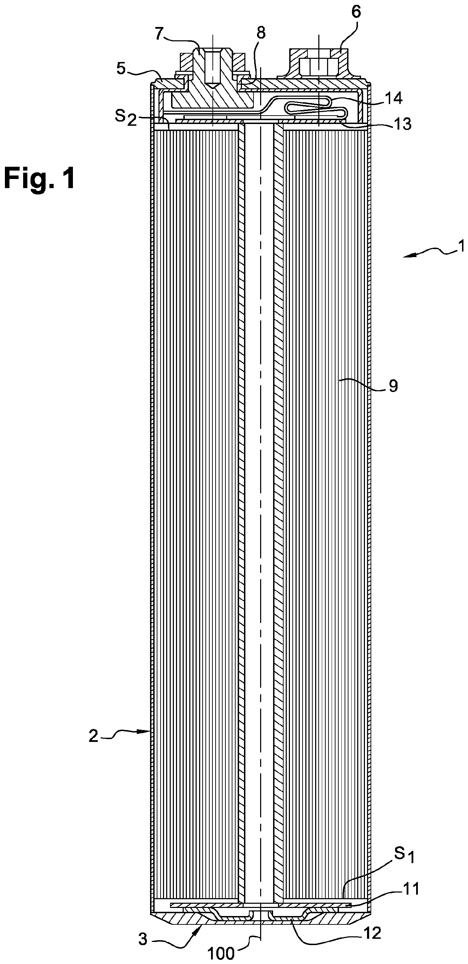

La Figure 1 représente un accumulateur 1 qui comprend un faisceau électrochimique 9 comportant une alternance d'électrodes positives et négatives encadrant des séparateurs imprégnés d'électrolyte. Typiquement, chaque électrode est composée d'un collecteur de courant métallique, appelé aussi feuillard, supportant sur au moins une de ses faces la matière électrochimiquement active. Le faisceau électrochimique 9 est disposé dans un conteneur étanche 2 s'étendant suivant une direction longitudinale. Ledit conteneur présente une paroi cylindrique et est délimité en l'une de ses extrémités suivant la direction longitudinale 100 par un fond 3 obturant l'une des extrémités du conteneur. Le conteneur est également délimité en l'autre de ses extrémités suivant la direction longitudinale 100 par un couvercle 5 doté de bornes de sortie de courant 6 et 7. Une première borne de sortie de courant, dans l'exemple la borne positive 6, est généralement soudée sur le couvercle. Une seconde borne de sortie de courant, dans l'exemple la borne négative 7, passe à travers le couvercle, elle est généralement fixée sur celui-ci par sertissage et un joint 8 isole électriquement la borne de sortie de courant négative 7 du couvercle 5.

Les bornes de sortie de courant 6, 7 assurent la continuité électrique entre les électrodes et l'application extérieure à laquelle l'accumulateur est associé. Il existe plusieurs façons de raccorder électriquement les électrodes d'une polarité à une des bornes de sortie de courant du conteneur. Une solution consiste à utiliser une connexion plane appliquée contre la surface définie par les extrémités des collecteurs de courant des électrodes d'une même polarité.

Comme représenté sur la figure 1, une pièce de connexion interne 11 raccorde la surface S1 définie par les extrémités des collecteurs des électrodes positives du faisceau 9, ces extrémités n'étant pas recouvertes de composés électrochimiquement actifs, avec une pièce conformée conductrice 12. Cette dernière est elle-même en contact avec le fond 3 du conteneur, le fond 3 ainsi que les parois latérales du conteneur étant électriquement conductrices avec le couvercle 5 et la borne positive 6 soudée au couvercle.

Il est à noter que la pièce conformée conductrice 12 est facultative et qu'un autre mode de réalisation est envisageable avec une pièce de connexion 11 directement connectée au fond 3 du conteneur.

Selon l'invention, le procédé de connexion des électrodes d'une même polarité à la borne de sortie de courant correspondante d'un accumulateur de courant comprend une étape selon laquelle on fournit un conteneur renfermant un faisceau électrochimique doté d'une alternance d'électrodes positives et négatives encadrées par des séparateurs. Puis on réalise sur au moins l'une des surfaces définies par les extrémités des collecteurs des électrodes d'une même polarité une étape de fabrication additive de la pièce de connexion interne reliant électriquement la première et/ou la seconde surface à la borne de sortie de courant correspondante, l'étape de fabrication additive étant réalisée au moyen d'une technique choisie dans la liste constituée par la fusion sélective par laser, le frittage sélectif par laser, le dépôt à fil tendu. On entend par «étape de fabrication additive », une étape qui consiste à mettre en forme une pièce par ajout de matière et/ou par empilement de couches successives, en opposition à la mise en forme par enlèvement de matière, tel que l'usinage, cette étape de fabrication étant assistée par ordinateur. Ces étapes de fabrication sont particulièrement appropriées sur le plan économique à la production de petits composants en grandes quantités ou bien à la production à façon de pièces avec une grande complexité géométrique.

La fabrication additive se définit en fonction de trois paramètres principaux, à savoir le choix de la matière de base, le type de source d'énergie utilisée et le modèle de conception assistée par ordinateur (CAO).

Dans le cas présent, et du fait que le matériau de base du composant à fabriquer est un matériau métallique, le processus de mise en forme est du type physique (par opposition à un processus de type chimique). Il consiste soit en une fusion de la matière de base suivie de la solidification dudit matériau fondu, soit en un frittage dudit matériau.

La matière de base peut être sous forme de poudre, de ruban ou de fil. Cette matière peut être présente dès le début du processus de mise en forme ou bien déposée au fur et à mesure de ce processus.

L'apport d'énergie est fourni par un faisceau laser ou bien grâce à une source thermique. L'étape de fabrication additive est choisie dans la liste constituée par la fusion sélective par laser, le frittage sélectif par laser, le dépôt à fil tendu.

L'étape de fabrication additive du type « fusion sélective par laser » consiste à faire fondre une poudre métallique à travers une buse chauffée à haute température. Un filament en fusion (de l'ordre du dixième de millimètre) est déposé en ligne de manière continue de manière à reconstituer le modèle en trois dimensions en venant se coller par fusion sur ce qui a été déposé au préalable. La fusion sélective par laser permet de contrôler de manière précise les apports d'énergie et par conséquent l'échauffement du substrat, le substrat étant défini par la surface sur laquelle est déposée la matière. De ce fait, il est possible d'adapter la puissance du laser de manière à protéger la surface définie par les extrémités des collecteurs des électrodes d'une même polarité. C'est un mode de réalisation particulièrement avantageux pour assembler les connexions négatives et positives sur les polarités respectives du faisceau électrochimique. En effet, le métal en fusion sera directement et intimement lié aux électrodes du faisceau assurant une parfaite continuité électrique

L'étape de fabrication additive du type « frittage sélective par laser » s'apparente à celle qui repose sur la fusion sélective par laser. Elle consiste en effet à déposer des couches successives à deux dimensions afin de reconstituer le modèle à trois dimensions. Cette étape de fabrication nécessite un apport en continu de fines couches de poudre que balaye successivement un laser de haute puissance afin de les faire fondre. La solidification a lieu directement après l'arrêt du laser. Toutefois, dans ce cas, le laser à haute puissance opère un frittage des fines couches de poudre et non une simple fusion. Ce procédé permet alors d'obtenir des connexions internes indépendamment du support et selon le design souhaité. Ces connexions pourront être rapportées ensuite sur la première ou sur la seconde surface. Ce procédé est particulièrement adapté à la réalisation de pièces aux formes complexes, ce qui peut être le cas lors de la réalisation de connexions.

L'étape de fabrication additive du type par « dépôt à fil » est très similaire à « la fusion sélective par laser », elle consiste à faire fondre un fil métallique à travers une buse chauffée à haute température. Un filament en fusion (de l'ordre du dixième de millimètre) est déposé en ligne de manière continue de manière à reconstituer le modèle en trois dimensions en venant se coller par fusion sur ce qui a été déposé au préalable. C'est aussi le mode de réalisation privilégié pour assembler directement les connexions négatives et positives sur les polarités respectives du faisceau électrochimique.

Bien entendu, la pièce de connexion interne peut être réalisée sur la première surface S1 définie par les extrémités des collecteurs des électrodes positives, tout comme sur la seconde surface S2 définie par les extrémités des collecteurs des électrodes négatives.

Dans le cas où la pièce de connexion interne est réalisée sur la première surface S1 définie par les extrémités des collecteurs des électrodes positives, la pièce de connexion interne est préférablement constituée d'un alliage d'aluminium, de façon à être compatible avec le fond et le conteneur.

Dans le cas où la pièce de connexion interne est réalisée sur la seconde surface S2 définie par les extrémités des collecteurs des électrodes négatives, la pièce de connexion interne est préférablement constituée d'un alliage de cuivre, de façon à être compatible avec la borne négative elle-même en alliage de cuivre. A noter que d'autres matériaux pourraient tout aussi bien être compatibles avec la borne négative, à savoir les alliages de nickel, les aciers alliés au nickel et les aciers inoxydables.

Avantageusement, le procédé de fabrication peut comprendre une étape selon laquelle un élément conducteur est interposé entre les connexions internes et la borne de sortie de courant à laquelle elles sont reliées.

Ainsi, tel que représenté sur la figure 1, on a interposé entre la pièce de connexion interne 11 et la borne de sortie de courant positive 6, un élément conducteur élastique 12 tel que décrit dans la demande de Brevet en France n°0902910 du 15/06/09, ayant une forme adaptée à établir un contact entre le fond 3 du conteneur et la pièce de connexion interne 11. Cet élément facilite également la déchirure complète du fond du conteneur en cas de surpression à l'intérieur du conteneur.

De même, on a interposé entre la pièce de connexion interne 13 et la borne de sortie de courant négative 7, un élément conducteur 14 ayant la forme d'une languette.

Tel que représenté sur la figure détaillée 2, la languette 14 peut former au moins un pliage afin d'apporter un effet élastique au raccordement électrique entre les électrodes négatives et la borne de sortie de courant négative qui compense les variations de hauteur des faisceaux électrochimiques d'un accumulateur à l'autre.

Dans le cas où une languette 14 est interposée entre la pièce de connexion interne 13 et la borne de sortie de courant négative 7, il est possible de fixer ladite languette à ladite connexion suivant une étape classique de soudage par laser. De même, le contact entre la borne de sortie de courant négative et la languette peut également s'effectuer lors de cette étape de soudage.

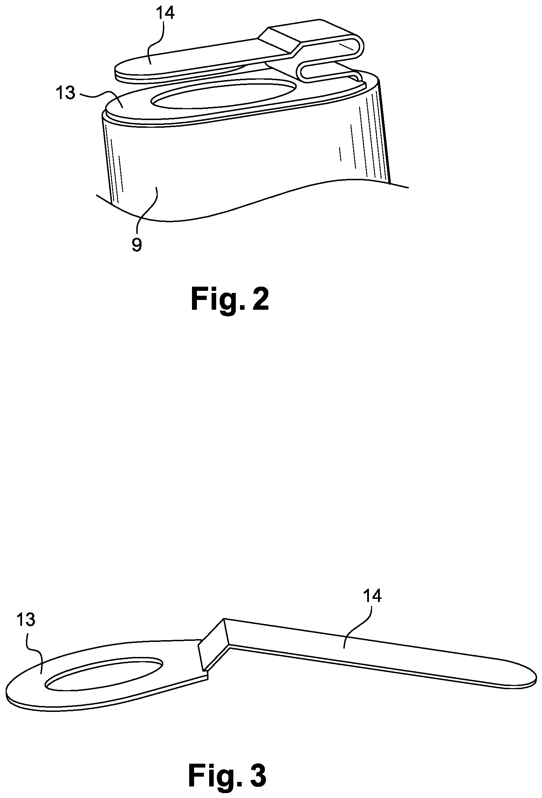

Toutefois, il est particulièrement avantageux de construire suivant une étape de fabrication additive, la languette dans la continuité de l'étape de fabrication additive de la pièce de connexion interne, de sorte que la languette et la pièce de connexion interne forment une seule et même pièce, telle que représentée en figure 3.

De manière avantageuse, la pièce de connexion interne admet une épaisseur comprise entre 0,4 et 1,2 mm, la valeur minimale garantissant une tenue mécanique de la liaison et un passage de courant minimum et la valeur maximale permettant de passer des courants de l'ordre de 300A en continu et jusqu'à quelque milliers d'ampères en mode impulsionnel.

Les connexions internes 11, 13 selon l'invention permettent le passage de courants forts pour des applications de puissance. La résistance interne d'un accumulateur avec de telles connexions internes a été mesurée et comparée à la résistance interne d'un accumulateur selon l'art antérieur doté de connexions soudées et réalisées sans le recours à une étape de fabrication additive. La résistance interne de l'accumulateur selon l'invention est sensiblement plus faible que la résistance interne d'un accumulateur avec une connexion soudée et réalisées sans le recours à une étape de fabrication additive de l'invention. Grâce à ces techniques de fabrication additive, les connexions internes 13, 14 présentent des épaisseurs extrêmement précises et constantes sur toute leur superficie. Dans le cadre d'accumulateurs du type Lithium-ion, elles sont de l'ordre de 0,5 mm à 1 mm.

Le fait de pouvoir s'affranchir des plaques de nickel de l'art antérieur permet de rendre les accumulateurs plus compacts et plus légers. Le prix de fabrication des accumulateurs peut également être réduit car une pièce unique est utilisée pour la pièce de connexion interne.

De plus, le procédé de connexion décrit ci-dessus permet de réaliser une liaison entre la pièce de connexion et le faisceau électrochimique ayant une meilleure tenue mécanique et un meilleur passage de courant par rapport à une soudure réalisée entre une pièce de connexion en matériau colaminé cuivre/nickel et un faisceau électrochimique, comme par exemple dans le document EP-A1-2 093 820. De plus, la réalisation de cette liaison n'entraine pas de brûlure des séparateurs.

De plus, l'étape de fabrication additive permet une meilleure cohésion de la pièce de connexion interne avec la surface définie par les extrémités des collecteurs des électrodes d'une même polarité. En effet, la construction progressive de la pièce de connexion interne, qui intègre des étapes de solidification du matériau fondu, permet d'obtenir une quasi-continuité des sections de passage des courants. De ce fait, on obtient des performances en puissance supérieures à celles obtenues avec une pièce de connexion soudée au laser. En outre, cette quasi-continuité permet également d'obtenir une diminution de la résistance interne de l'accumulateur.

Les modes de réalisation décrits ci-dessus en relation avec les figures doivent être considérés comme ayant été présentés à titre illustratif et non restrictif, et l'invention n'est pas censée être limitée aux détails fournis ici mais peut être modifiée en restant dans le cadre de la portée des revendications annexées. En particulier la borne de sortie de courant soudée à la paroi du couvercle peut être la borne négative et la borne de sortie de courant soudée par sertissage à travers le couvercle peut être la borne positive. L'invention s'applique aussi à tout type d'accumulateur, qu'il soit prismatique, cylindrique ou qu'il soit du type lithium-ion, nickel cadmium ou nickel métal hydrure.

## Revendications

1. Procédé de connexion d'électrodes de même polarité d'un accumulateur (1) à une borne de sortie de courant (6 , 7), ledit accumulateur comportant :
- deux bornes de sortie de courant (6, 7),
- un conteneur (2) renfermant un faisceau électrochimique (9) comprenant une alternance d'électrodes positives et négatives, les extrémités des collecteurs de courant des électrodes positives et négatives définissant respectivement une première (S1) et seconde (S2) surface ,
ledit procédé étant **caractérisé en ce qu'**il comprend une étape de fabrication additive d'une pièce de connexion interne (11, 13) reliant électriquement la première et/ou la seconde surface à la borne de sortie de courant correspondante, l'étape de fabrication additive étant réalisée au moyen d'une technique choisie dans la liste constituée par la fusion sélective par laser, le frittage sélectif par laser, le dépôt à fil tendu.

2. Procédé de connexion selon la revendication 1, **caractérisé en ce qu'**il comprend une étape dans laquelle un élément conducteur (12, 14) est interposé entre la au moins une pièce de connexion interne (11, 13) et la borne de sortie de courant.

3. Procédé de connexion selon la revendication 2, **caractérisé en ce qu'**il comprend une étape dans laquelle l'élément conducteur (12, 14) est soudé par laser à la pièce de connexion interne (11, 13).

4. Procédé de connexion selon la revendication 2, **caractérisé en ce qu'**il comprend une étape de fabrication additive de l'élément conducteur (12, 14) de sorte que l'élément conducteur et la pièce de connexion interne forment une seule et même pièce.

5. Procédé de connexion selon l'une quelconque des revendications précédentes, **caractérisé en ce que** l'étape de fabrication additive est réalisée par fusion sélective par laser, selon laquelle une poudre est injectée conjointement au faisceau laser afin de projeter le métal en fusion sur la première ou seconde surface.

6. Procédé de connexion selon l'une quelconque des revendications précédentes, **caractérisé en ce que** l'étape de fabrication additive est réalisée par frittage sélectif par laser, selon laquelle des couches de poudre métallique sont successivement balayées par un faisceau laser, l'empilage des couches de poudres fusionnées conduisant à la réalisation de la pièce connexion interne.

7. Procédé de connexion selon l'une quelconque des revendications précédentes, **caractérisé en ce que** l'étape de fabrication additive est réalisée par dépôt à fil tendu, selon laquelle un fil est déployé conjointement au faisceau laser de manière à projeter du métal en fusion sur la première ou seconde surface.

8. Procédé de connexion selon l'une quelconque des revendications précédentes, **caractérisé en ce que** la pièce de connexion interne (11) est réalisée sur la première surface (S1) définie par l'extrémité des collecteurs de courant des électrodes positives, la pièce de connexion interne comprenant un matériau à base d'aluminium.

9. Procédé de connexion d'un accumulateur de courant (1) selon la revendication 8 prise en combinaison avec la revendication 2, **caractérisé en ce que** l'élément conducteur (12) est mis électriquement en contact avec le fond (3) du conteneur (2), ledit fond étant électriquement en contact avec la paroi du conteneur, elle-même en contact avec un couvercle (5) obturant ledit conteneur, ledit couvercle étant électriquement en contact avec la borne de sortie de courant positive (6).

10. Procédé de connexion selon l'une quelconque des revendications précédentes, **caractérisé en ce que** la pièce de connexion interne (13) est réalisée sur la seconde surface (S2) définie par l'extrémité des collecteurs des électrodes négatives, la pièce de connexion interne comprenant un matériau choisi dans le groupe constitué par le cuivre et ses alliages, le nickel et ses alliages, les aciers alliés au nickel et les aciers inoxydables.

11. Procédé de connexion selon la revendication 10 prise en combinaison avec la revendication 2, **caractérisé en ce que** l'élément conducteur (14) est mis électriquement en contact avec la borne de sortie de courant négative (7), et préférentiellement soudé à celle-ci.

12. Procédé de connexion selon l'une quelconque des revendications précédentes, **caractérisé en ce que** la pièce de connexion interne a une épaisseur comprise entre 0,4 et 1,2 mm.

13. Accumulateur (1) comportant deux bornes de sortie de courant (6, 7), un faisceau électrochimique (9) comprenant une alternance d'électrodes positives et négatives, les extrémités des collecteurs de courant des électrodes positives définissant une première surface et les extrémités des collecteurs de courant des électrodes négatives définissant une seconde surface, **caractérisé en ce que** les électrodes de même polarité sont connectées à la borne de sortie de courant correspondante selon un procédé conforme à l'une quelconque des revendications 1 à 12.

## Patentansprüche

1. Verbindungsverfahren von Elektroden gleicher Polarität eines Akkumulators (1) mit einer Stromausgangsklemme (6, 7), wobei der Akkumulator Folgendes aufweist:
- zwei Stromausgangsklemmen (6, 7),
- einen Behälter (2), der ein elektrochemisches Bündel (9) mit einer Alternanz von positiven und negativen Elektroden enthält, wobei die Enden der Stromabnehmer der positiven und negativen Elektroden jeweils eine erste (S1) und eine zweite (S2) Oberfläche bilden,
wobei das Verfahren **dadurch gekennzeichnet ist, dass** es einen zusätzlichen Herstellungsschritt eines inneren Verbindungsstücks (11, 13) aufweist, das die erste und/oder die zweite Oberfläche elektrisch an die entsprechende Stromausgangsklemme anschließt, wobei der zusätzliche Herstellungsschritt durch eine Technik hergestellt wird, die aus der Liste ausgewählt wird, die aus dem selektiven Laserschmelzen, dem selektiven Lasersintern, dem Abscheiden mit gespanntem Draht besteht.

2. Verbindungsverfahren nach Anspruch 1, **dadurch gekennzeichnet, dass** es einen Schritt aufweist, bei dem ein leitendes Element (12, 14) zwischen dem mindestens einen inneren Verbindungsstück (11, 13) und der Stromausgangsklemme angeordnet wird.

3. Verbindungsverfahren nach Anspruch 2, **dadurch gekennzeichnet, dass** es einen Schritt aufweist, bei dem das leitende Element (12, 14) an das innere Verbindungsstück (11, 13) laserverschweißt wird.

4. Verbindungsverfahren nach Anspruch 2, **dadurch gekennzeichnet, dass** es einen zusätzlichen Herstellungsschritt des leitenden Elements (12, 14) derart aufweist, dass das leitende Element (12, 14) und das innere Verbindungsstück ein und dasselbe Teil bilden.

5. Verbindungsverfahren nach einem der vorhergehenden Ansprüche, **dadurch gekennzeichnet, dass** der zusätzliche Herstellungsschritt durch selektives Laserschmelzen durchgeführt wird, wobei ein Pulver gleichzeitig mit dem Laserstrahl injiziert wird, um das geschmolzene Metall auf die erste oder zweite Oberfläche zu projizieren.

6. Verbindungsverfahren nach einem der vorhergehenden Ansprüche, **dadurch gekennzeichnet, dass** der zusätzliche Herstellungsschritt durch selektives Lasersintern durchgeführt wird, wobei Metallpulver-schichten nacheinander von einem Laserstrahl abgetastet werden, wobei das Aufschichten der geschmolzenen Pulverschichten zur Herstellung des inneren Verbindungsstücks führt.

7. Verbindungsverfahren nach einem der vorhergehenden Ansprüche, **dadurch gekennzeichnet, dass** der zusätzliche Herstellungsschritt durch Abscheiden mit gespanntem Draht durchgeführt wird, wobei ein Draht gleichzeitig mit dem Laserstrahl derart eingesetzt wird, um geschmolzenes Metall auf die erste oder zweite Oberfläche zu projizieren.

8. Verbindungsverfahren nach einem der vorhergehenden Ansprüche, **dadurch gekennzeichnet, dass** das innere Verbindungsstück (11) auf der ersten Oberfläche (S1) hergestellt wird, die durch das Ende der Stromabnehmer der positiven Elektroden definiert wird, wobei das innere Verbindungsstück ein Material auf Aluminiumbasis umfasst.

9. Verbindungsverfahren eines Stromakkumulators (1) nach Anspruch 8 in Kombination mit Anspruch 2, **dadurch gekennzeichnet, dass** das leitende Element (12) mit dem Boden (3) des Behälters (2) elektrisch in Kontakt gebracht wird, wobei der Boden mit der Wand des Behälters elektrisch in Kontakt gebracht wird, die selbst mit einem Deckel (5) in Kontakt steht, der den Behälter verschließt, wobei der Deckel elektrisch in Kontakt mit der positiven Stromausgangsklemme (6) steht.

10. Verbindungsverfahren nach einem der vorhergehenden Ansprüche, **dadurch gekennzeichnet, dass** das innere Verbindungsstück (13) auf der zweiten Oberfläche (S2) hergestellt wird, die durch das Ende der Stromabnehmer der negativen Elektroden definiert wird, wobei das innere Verbindungsstück ein Material umfasst, das aus der Gruppe ausgewählt wird, die aus Kupfer und seinen Legierungen, Nickel und seinen Legierungen, den mit Nickel legierten Stählen und den rostfreien Stählen besteht.

11. Verbindungsverfahren nach Anspruch 10 in Kombination mit Anspruch 2, **dadurch gekennzeichnet, dass** das leitende Element (14) mit der negativen Stromausgangsklemme (7) elektrisch in Kontakt gebracht wird und vorzugsweise an diese angeschweißt wird.

12. Verbindungsverfahren nach einem der vorhergehenden Ansprüche, **dadurch gekennzeichnet, dass** das innere Verbindungsstück eine Dicke aufweist, die zwischen 0,4 und 1,2 mm beträgt.

13. Akkumulator (1), umfassend zwei Stromausgangsklemmen (6, 7), ein elektrochemisches Bündel (9) mit einer Alternanz von positiven und negativen Elektroden, wobei die Enden der Stromabnehmer der positiven Elektroden eine erste Oberfläche definieren und die Enden der Stromabnehmer der negativen Elektroden eine zweite Oberfläche definieren, **dadurch gekennzeichnet, dass** die Elektroden gleicher Polarität an die entsprechende Stromausgangsklemme nach einem Verfahren gemäß einem der Ansprüche 1 bis 12 angeschlossen sind.

## Claims

1. A method for connecting electrodes of a same polarity of a secondary cell (1) to a current output terminal (6, 7), said secondary cell comprising:
- two current output terminals (6, 7),
- a container (2) containing an electrode plate group (9) comprising alternating positive and negative electrodes, the ends of the current collectors of the positive and negative electrodes defining a first (S1) and second (S2) surface respectively,
said method being **characterized in that** it comprises a step of additive manufacturing of an internal connecting part (11, 13) electrically connecting the first and/or the second surface to the corresponding current output terminal, wherein the additive manufacturing step is carried out by means of a technique selected from the list constituted by selective laser melting, selective laser sintering and fused deposition modeling.

2. The connection method according to claim 1, **characterized in that** it comprises a step in which a conductive element (12, 14) is interposed between the at least one internal connecting part (11, 13) and the current output terminal.

3. The connection method according to claim 2, **characterized in that** it comprises a step in which the conductive element (12, 14) is laser welded to the internal connecting part (11, 13).

4. The connection method according to claim 2, **characterized in that** it comprises a step of additive manufacturing of the conductive element (12, 14) so that the conductive element and the internal connecting part form one and the same part.

5. The connection method according to any one of the preceding claims, **characterized in that** the additive manufacturing step is carried out by selective laser melting, according to which a powder is injected in conjunction with the laser beam in order to spray the a molten metal over the first or second surface.

6. The connection method according to any one of the preceding claims, **characterized in that** the additive manufacturing step is carried out by selective laser sintering, according to which layers of metallic powder are successively scanned by a laser beam, the building up of the layers of fused powders leading to the production of the internal connection part.

7. The connection method according to any one of the preceding claims, **characterized in that** the additive manufacturing step is carried out by fused deposition modeling, according to which a wire is deployed in conjunction with the laser beam so as to spray molten metal over the first or second surface.

8. The connection method according to any one of the preceding claims, **characterized in that** the internal connecting part (11) is produced on the first surface (S1) defined by the end of the current collectors of the positive electrodes, the internal connecting part comprising an aluminium-based material.

9. The method for connecting a current secondary cell (1) according to claim 8 in combination with claim 2, **characterized in that** the conductive element (12) is brought into electrical contact with the base (3) of the container (2), said base being in electrical contact with the wall of the container, itself in contact with a cover (5) closing said container, said cover being in electrical contact with the positive current output terminal (6).

10. The connection method according to any one of the preceding claims, **characterized in that** the internal connecting part (13) is produced on the second surface (S2) defined by the end of the collectors of the negative electrodes, the internal connecting part comprising a material selected from the group constituted by copper and alloys thereof, nickel and alloys thereof, nickel-alloy steels and stainless steels.

11. The connection method according to claim 10 in combination with claim 2, **characterized in that** the conductive element (14) is brought into electrical contact with the negative current output terminal (7), and preferentially welded thereto.

12. The connection method according to any one of the preceding claims, **characterized in that** the internal connecting part has a thickness comprised between 0.4 and 1.2 mm.

13. A secondary cell (1) comprising two current output terminals (6, 7), an electrode plate group (9) comprising alternating positive and negative electrodes, the ends of the current collectors of the positive electrodes defining a first surface and the ends of the current collectors of the negative electrodes defining a second surface, **characterized in that** the electrodes of a same polarity are connected to the corresponding current output terminal according to a method according to any one of claims 1 to 12.
